# EUROPEAN PATENT APPLICATION

(11) **EP 2 541 566 A1**
(43) Date of publication of application: **02.01.2013**
(21) Application number: 10846329.0
(22) Date of filing: 30.07.2010
(51) Int. Cl.: H01G 9/04, H01G 9/00, H01M 4/00

(54) **MANUFACTURING METHOD FOR LONG-LIVED NEGATIVE ELECTRODE AND CAPACITOR BATTERY ADOPTING THE SAME**

(30) Priority: 26.02.2010 CN 201010114612
(71) Applicant: Shanghai Aowei Technology Development Co., Ltd., Shanghai 201203 (CN)
(72) Inventor: HUA, Li, Shanghai 201203 (CN); YANG, Endong, Shanghai 201203 (CN); LIANG, Quanshun, Shanghai 201203 (CN); AN, Zhongxun, Shanghai 210203 (CN); WU, Mingxia, Shanghai 201203 (CN); CAO, Xiaowei, Shanghai 201203 (CN)
(74) Representative: Langley, Peter James
(86) International application number: PCT/CN2010/001153
(87) International publication number: WO 2011/103705

(57) **Abstract**

A manufacturing method for a long-lived negative electrode and an organic hybrid type supercapacitor battery adopting the same. The manufacturing method for the negative electrode includes the following steps: mixing materials, which includes mixing a lithium fast storage carbon and a binder (3) with a solvent; pressing, which includes pressing the mixture into a sheet plate with a certain thickness by a roller press; coating, which includes preparing a slurry with a conductive agent (1) and coating the slurry onto a negative current collector (2); attaching, which includes attaching the sheet plate onto the negative current collector (2) coated with a layer of conductive agent (1) by pressing; preparing the negative electrode by drying, pressing, cutting and vacuum drying. With the process of preparing the sheet plate by pressing before attaching it onto the current collector, the negative electrode has a higher compaction density and cycle life. The manufactured organic hybrid type supercapacitor battery has characteristics with high energy density (up to 45-80Wh/Kg) and high power density (> 4500 W/Kg), and it can be widely used in electric vehicles, power tools, solar energy storage, wind energy storage, portable appliances and other fields.

## Description

### FIELD OF THE INVENTION

The present invention relates to the incorporation of super capacitor technology and lithium-ion battery technology, involving ultracapacitor and lithium-ion batteries.

### BACKGROUND OF THE INVENTION

Super capacitors are a new type of electrochemical energy storage device between a traditional capacitor and a battery, which have a higher energy density compared to traditional capacitor. The electrostatic capacity can be up to one thousand Farahs or even ten thousand Farahs. They have a higher power density and long cycle life compared to the battery, so they combine the advantages of traditional capacitors and batteries, and they are a chemical power source with promising application potential. They have strengths such as a high specific energy, high power density, long cycle life, wide working temperature range and are maintenance-free.

In accordance with different energy storage principles, super capacitors can be classified into three categories: electric double layer capacitor (EDLC), Faraday Pseudo-capacitance super capacitors and hybrid super capacitors. Electric double layer capacitors achieve energy storage by storing electric charge on the double layers (surface of both electrodes). Faraday pseudo-capacitance super capacitors store energy by the Faradic "pseudo-capacitor generated by the fast oxidation reaction at the surface of electrode. Hybrid super capacitors are a device, wherein one end is a non-polarized electrode (such as nickel hydroxide), and the other end is the polarized electric double layer capacitor electrode (activated carbon). This hybrid design can significantly improve the energy density of super capacitors.

A super capacitor can be classified into an inorganic super capacitor, an organic super capacitor and a polymer super capacitor by the electrolyte used. As the most common inorganic electrolytes are aqueous solutions such as high concentrated acid (such as H₂SO₄) or base(KOH). Neutral aqueous electrolytes are rarely used in actual application. Organic electrolytes are generally mixed electrolytes of a quaternary ammonium salt or lithium salt as the solvent, and organic solvents (eg acetonitrile) with high electrical conductivity. Polymer electrolytes have only been use in the laboratory stage, has and her are commercial products.

Super capacitors using organic electrolytes can greatly improve the operating voltage of the capacitor. The equation E = 1/2 CV ² shows that it is a great help to improve the energy density of the capacitor. Today, the mature organic super capacitor technology generally uses symmetrical structure, ie. the anode and cathode are both carbon materials, with electrolytes of quaternary ammonium salts as the solvent and organic solvents (eg acetonitrile). They have high power density, which can reach 5000 the -6000W/Kg, but the energy density is low, only 3-5Wh/Kg, Therefore, in order to further improve the energy density of organic super capacitors, hybrid structural design, ie. different active materials for the anode and for the cathode, are used. In recent years, the study of organic hybrid super capacitors is increasing, increasing the use of the organic hybrid super capacitor using activated carbon as the anode, lithium titanate as the cathode. In the alternative, the organic hybrid super capacitor contains polythiophene as the anode, and lithium titanate as the cathode etc.

However, due to the conventional coating methods that are generally used in the processing of electrodes for these organic hybrid super capacitors, the compaction density of the electrode is restricted, so the energy density of these super capacitors is still unsatisfactory comparing with conventional batteries, and the cycle life of them is also restricted.

### SUMMARY OF THE INVENTION

The present invention is to address the problems mentioned above. The purpose of the present invention is to improve the adhesive strength of negative electrode, and to make the electrode with higher compaction density and long cycle life expectancy. Additional improvements include maintaining the strengths, such as high-power density, non-polluting, high security, and maintenance-free, substantially increasing the energy density and cycle life of super capacitor, and further broadening the applications of super capacitors.

This invention is a preparation method of a long cycle life negative electrode as well as the organic hybrid capacitor battery using this negative electrode. The preparation steps of the negative electrode are as follows: Blend all materials: blend a carbon material with a fast lithium intercalation capability with a binder, and add in a solvent; Pressing: press the blended material to get an electrode plate of a certain thickness; Coating: stir the conductive agent into a paste, then attach to a cathode current collector; Electrode Attaching: attach the electrode plate to the conductive agent the coated negative current collector. After the process of drying, grinding, cutting and vacuum drying, a negative electrode is formed.

In one embodiment, attaching the electrode plate to the conductive agent coated negative current collector, makes its density 1.2~1.6g/cm³. In another embodiment, the organic hybrid capacitor battery with a long cycle life negative electrode, the anode uses the mixture of a lithium-ion intercalation compound and porous activated carbon with the coating process, and the cathode uses carbon material with fast lithium intercalation capability, in which the interlayer spacing is greater than 0.372nm, and the electrolyte used is organic solution.

In one embodiment, the cathode uses carbon material with a fast lithium intercalation capability, in which interlayer spacing is greater than 0.372nm, hard carbon is one of the typical materials.

In another embodiment, the porous carbon as described should include one of or a mixture of activated carbon, carbon cloth, carbon fiber, carbon fiber felt, carbon aerogels and carbon nanotubes thereof.

In another embodiment, the lithium-ion intercalation compound as described should include one of or a mixture of LiCoO₂. LiMn₂O₄.LiNiO₂. LiFePO₄. LiNi_{0.8}Co_{0.2}O₂. LiNi_{1/3} Co_{1/3} Mn_{1/3}O₂ and LiMnO₂.

In yet another embodiment, the solvent in the electrolyte as described should include at least one or several of: LiClO₄, LiBF₄, LiPF₆, LiCF₃SO₃, LiN(CF₃SO₂), LiBOB, LiAsF₆ and Et₄BF₄ mixed with at least one or several of Me₃EtNBF₄, Me₂Et₂NBF₄, MeEt₃NBF₄, Et₄NBF₄, Pr₄NBF₄, MeBu₃NBF₄, Bu₄NBF₄, Hex₄NBF₄, Me₄PBF₄, Et₄PBF₄, Pr₄PBF₄ and Bu₄PBF₄, and the non-aqueous organic solvent in electrolyte as described includes one or several of ethylene carbonate, propylene carbonate, γ-butyrolactone, dimethyl carbonate, diethyl carbonate, butylene ester carbonate, ethyl methyl carbonate, Methyl Propyl Carbonate, sulfurous acid vinyl ester, acrylic ester of sulfurous acid and ethyl acetate and acetonitrile.

In one embodiment, the separator as described should include microporous polyethylene film, polypropylene microporous membranes, composite membranes, inorganic ceramic membrane, the paper diaphragm and non-woven diaphragm.

In one embodiment, the invention contemplates a preparation method to make the organic hybrid capacitor battery as described in claim 2-7, including the steps of:
( 1 ) Preparation steps for the anode: first mix a lithium-ion intercalated compound, porous activated carbon materials, the conductive agent, and a binder, pulp the mixture, then coat the mixture on an anode current collector. After the process of drying, grinding , cutting and vacuum drying, an anode will be prepared;
( 2 ) Preparation steps for cathode: adopt the process as described in claim 1;
( 3 ) Assembly steps: stack or wind the prepared anode and cathode into cells placed in aluminum composite film, aluminum casing, steel casing, or plastic casing, and then seal the casing, inject in an electrolyte of non-aqueous organic solvents containing lithium ions and a quaternary ammonium salt.

In one embodiment, the conductive agent includes one or a mixture of: natural graphite, artificial graphite, carbon black, acetylene black, mesophase carbon microbeads, hard carbon, petroleum coke, carbon nanotubes and graphene; and the binder as described includes one or several of: polytetrafluoroethylene, polyvinylidene fluoride, ethylene, hydroxypropyl methyl cellulose, carboxymethyl cellulose and styrene butadiene rubber.

In another embodiment, the cathode current collector includes aluminum foil or aluminum mesh, and the anode current collector as described includes copper foil or copper mesh.

The negative electrode made through the non-coating process is used to make organic hybrid super capacitors, which has features such as high energy density and long cycle life. They can be widely used in electric vehicles, power tools, solar energy storage, wind energy storage, portable electric appliances and other fields.

### BRIEF DESCRIPTION OF THE FIGURES

Fig1: the schematic diagram of a coating process of making electrodes using current technology
Fig2: the schematic diagram of a process of one embodiment of the present invention for making a negative electrode.

### DETAILED DESCRIPTION

Further clarification of the present invention in the application examples is made according to the attached figures:

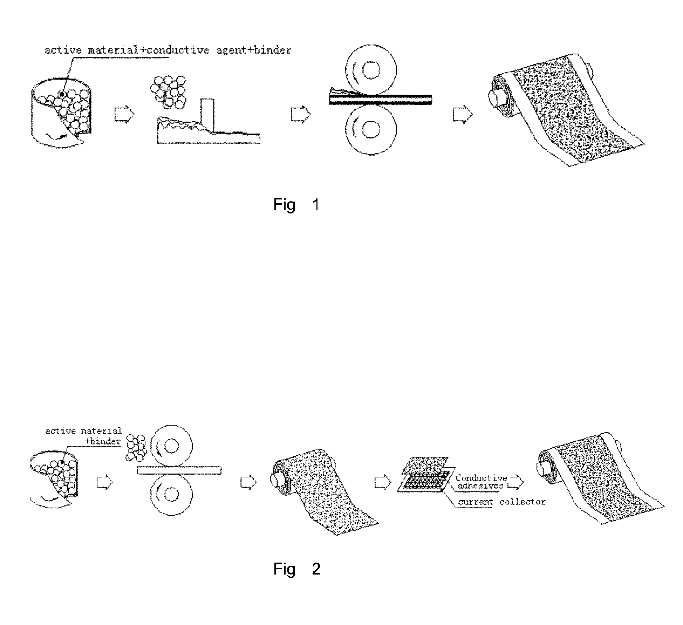

According to Fig 1, using the current technology, the coating process in making a negative electrode includes: blending materials, coating, and molding by rolling. The active material, conductive agent, and binder are blended to form a paste and coated onto a copper foil or copper mesh. After the process of drying , grinding, cutting and vacuum drying, a negative electrode is formed.

According to Fig 2, the process in making negative electrode in the present invention includes: Blending carbon material with a fast lithium intercalation capability with a binder, and adding in a solvent; pressing the blended material to get an electrode plate of a certain thickness; stirring the conductive agent to a paste, then attaching it to a cathode current collector; attaching the electrode plate to the conductive agent coated negative current collector; after the process of drying , grinding, cutting and vacuum drying, a negative electrode is formed. After attaching the electrode plate to the conductive agent coated negative current collector, the density is 1.2~1.6g/cm³. However, using current technology, the density is only 0.9~1.29 g/cm³.

In one embodiment, the invention contemplates an organic hybrid capacitor battery comprised of an anode, a cathode, a separator in between the anode and cathode and organic electrolyte. In another embodiment, the anode uses a mixture of a lithium-ion intercalation compound and activated carbon material, the cathode includes a carbon material with fast lithium intercalation capability, in which interlayer spacing is greater than 0.372nm, and the electrolyte includes an organic solvent containing lithium ions and quaternary ammonium salt. The negative electrode is made by the process of pressing the blended material into the electrode plate first, then attaching the plate onto a current collector, which enables the electrode to have a higher compacted density and cycle life.

In one embodiment, the carbon material with fast lithium intercalation capability, in which interlayer spacing is greater than 0.372nm as described in present invention, hard carbon is one of the typical materials. The hard carbon as described in the present invention generally refers to nongraphitizable carbon, which has a high specific energy, (up to 300-700mAh / g,), and good charge/discharge rate capability. The lithium-ion embedded in such materials do not cause significant structural expansion, and the hard carbon has a good charge-discharge cycle performance. In yet another embodiment, the carbon material includes resin carbon and organic polymer pyrolytic carbon. The resin carbon can include carbon-phenolic resin, epoxy carbon, poly Furfuryl alcohol resin carbon and furfural resin carbon and the organic polymer pyrolytic carbon as described includes benzene, carbon, poly Furfuryl alcohol hot solution of carbon, PVC, pyrolytic carbon, and Phenolic pyrolytic carbon.

In one embodiment, the lithium-ion intercalation compound as described should include one of or a mixture of LiCoO₂. LiMn₂O₄.LiNiO₂. LiFePO₄. LiNi_{0.8}Co_{0.2}O₂. LiNi_{1/3} Co_{1/3} Mn_{1/3}O₂ and LiMnO₂. Lithium ions usually demonstrates very good reversibility in the intercalation and deintercalation process using such materials, and also good diffusion speed, accompanied by small volume change during the reaction, so they show good cycle characteristics and high current characteristics.

The solvent in the electrolyte as described should include at least one or several of: LiClO₄, LiBF₄, LiPF₆, LiCF₃SO₃, LiN(CF₃SO₂), LiBOB, LiAsF₆ and Et₄BF₄ mixed with at least one or several of Me₃EtNBF₄, Me₂Et₂NBF₄, MeEt₃NBF₄, Et₄NBF₄, Pr₄NBF₄, MeBu₃NBF₄, Bu₄NBF₄, Hex₄NBF₄, Me₄PBF₄, Et₄PBF₄, Pr₄PBF₄ and Bu₄PBF₄, and the non-aqueous organic solvent in the electrolyte as described includes one or several of ethylene carbonate, propylene carbonate, γ-butyrolactone, dimethyl carbonate, diethyl carbonate, butylene ester carbonate, ethyl methyl carbonate, Methyl Propyl Carbonate, sulfurous acid vinyl ester, acrylic ester of sulfurous acid and ethyl acetate and acetonitrile thereof. The organic electrolyte containing lithium salt has high ionic conductivity, and can provide fast access for the migration of lithium ions in the charge-discharge process to increase the reaction rate. It has a wide electrochemical stability potential range (stable between 0-5V), good thermal stability, wide temperature range, charge and discharge reaction stability of capacitor battery will be greatly enhanced, and the cycle life of capacitor battery will also be improved.

In one embodiment, the separator as described in the present invention includes polyethylene micro-pore membrane (PE), polypropylene micro-pore membrane (PP) ,composite film (PP + PE + PP), inorganic ceramic membrane and paper diaphragm, its thickness is usually between 10-30 µ m, the pore size is between 0.03 µ m-0.05 µ m, and has good adsorption capacity and good thermostability.

In another embodiment, the positive electrode current collector as described in the present invention may comprise aluminum foil or aluminum mesh, while the negative electrode current collector may comprise copper foil or copper mesh. Right amounts of conductive agent and binder are added in the production of the electrode. The conductive agent used in the present invention is graphite, carbon black, acetylene black, or their mixtures, with a high conductivity. The binder of the present invention may comprise one or several of polytetrafluoroethylene (PTFE), polyvinylidene fluoride (PVDF), hydroxypropyl methyl cellulose (HPMC), carboxymethyl cellulose (CMC) and styrene butadiene rubber (SBR).

In another embodiment, the method of making a positive electrode includes the steps of: weighing a proportionate amount of lithium-ion intercalation compound, porous carbon material, conductive agent, and binder, blend and stir them into a paste, then coat them onto the anode current collector. Followed by drying, grinding, cutting, and vacuum -drying to form the final positive electrode.

In yet another embodiment, the preparation steps of the negative electrode include the steps of: blending proportionate hard carbon and binder, stirring them into a paste, then coating them onto the cathode current collector. After drying, grinding, cutting and vacuum drying , the final negative electrode is formed.

In one embodiment, the cell could be made according to needs by stacking or winding positive and negative electrodes into prismatic or cylindrical shape, then putting the cell into the aluminum-plastic composite case, aluminum case, plastic case, or steel case for seal. A non-aqueous electrolyte in which organic solvent contains lithium ions salt is then injected in. The cell has high power density and energy density.

### EXAMPLES

Main raw material used in the examples are as follows:
LiNi _{1/3} Co _{1/3} M n _{1/3}O₂ -Henan Xinxiang Huaxin Energy Materials Co., Ltd.; Model: SY-A;
LiMn₂O₄ - Shijiazhuang Best Battery Materials Co., Ltd;
LiFePO₄ - Tianjin Stellan Energy Technology Co., Ltd. production, models: SLFP-ES01;
Activated carbon - KURARAY Japan, model: YP-17D;
Hard carbon - Shenzhen Battery Co., Model: HC-1;
Graphite powder - TIMCAL, model: KS-6;
Conductive carbon black - TIMCAL, model: Super-P;
Three-layer composite membrane (PP / PE / PP) - Ube Japan;
PVDF (polyvinylidene fluoride ethylene) - Kynar761, France;
PTFE (polytetrafluoroethylene) - DuPont, U.S;
NMP (1 - methyl -2 - pyrrolidone) - Shanghai Experimental Reagent Co., Ltd.

### Example 1

Preparation steps for the Positive Electrode: prepare a total of 500g of LiNi _{1/3} Co _{1/3} Mn _{1/3} O₂, active carbon, graphite, PVDF in a mass ratio of 75: 15: 5:5, mix them with NMP, and stir to a paste, then coat the paste on a 20 µ m aluminum foil (weight increase after coating: 2 40g/m ²)After the process of drying (110 ~ 120 °C), grinding, cutting ( size: 37.5* 59.5mm²) and 24h of vacuum drying ( 120 ~ 130 °C), a positive electrode is made.

Preparation steps for the negative Electrode: prepare a total of 500g of hardcarbon and PVDF in a mass ratio of 90: 10, mix them with NMP, and stir to a paste, then coat the paste on a 16 µ m copper foil (weight increase after coating: 120g/m²). After the process of drying ( 110 ~ 120°C), grinding(compaction density: 0.96g/cm³), cutting (size: 37.5* 59.5mm² ) and 24h of vacuum drying (120 ~ 130°C), a negative electrode is made.

A three-layer composite microporous membrane of polyethylene polypropylene is selected as a separator, the electrodes are put together in a aluminum casing (size:38 * 61 * 32) to make a cell (elastic ratio : 95%). The positive electrode are held together, and welded onto an aluminum lug. The negative electrode are held together, and welded onto a nickel plated copper lug. Then 20g of electrolyte, the solvent (LiPF₆ of 1mol / L, + Et₄ NBF₄ of 0.5 mol/ L) +solvent EC (ethylene carbonate) / DEC (diethyl carbonate) (wherein volume ratio is 1 _{:} 1 (is inject in followed by assembly to a prismatic super capacitor battery. After the formation process (performance activation of capacitor battery), a performance test was conducted as follows: charge the cell with constant current of 5A to 4.2V, shelve for 5 min, discharge the cell to 2.5V with a constant current of 5A. The test resulting is a specific energy of 60Wh/Kg, and a specific power of 5000W/Kg. After 20000 charge/discharge cycles with constant current of 5A, capacitance retention rate is at 82%.

### Example 2

Preparation steps for a Positive Electrode: prepare a total of 500g of LiNi _{1/3} Co _{1/3} Mn _{1/3} O₂, active carbon, graphite, PVDF in a mass ratio of 75: 15: 5:5, mix them with NMP, and stir into a paste. Coat the paste on a 20 µm aluminum foil (weight increase after coating: 240g/m²). After the process of drying (110 ~ 120 °C), grinding, cutting (size: 37.5* 59.5mm²) and 24h of vacuum drying (120 ~ 130 °C), a positive electrode is made.

Preparation steps for a negative Electrode: prepare a total of 500g of hardcarbon and PVDF in a mass ratio of 90: 10, mix them with deionized water, and stir into a paste. Grind the past with a roller press machine to obtain a sheet electrode, with a compaction density of 1.35. Prepare the conductive agent Super-P to a pulp, then coat the negative current collector with a layer of conductive agent. Finally, attach the sheet electrode to the negative current collector with the conductive agent. After the process of drying (110 ~ 120°C), grinding, cutting (size: 37.5* 59.5mm²) and vacuum drying, a negative electrode is made.

A three-layer composite microporous membrane of polyethylene polypropylene is selected as a separator. The electrodes are placed together in a aluminum casing (size:38 * 61 * 32) to make a cell (elastic ratio : 95%). The positive electrode are held together, and welded onto an aluminum lug. The negative electrode are held together, and welded onto a nickel plated copper lug. Then 20g of electrolyte, comprising a solvent (LiPF₆ of 1 mol / L, + Et₄ NBF₄ of 0.5 mol/ L) +solvent EC (ethylene carbonate) / DEC (diethyl carbonate) (wherein volume ratio is 1 _{:} 1 , is inject in and assembled to a prismatic super capacitor battery. After the formation process (performance activation of capacitor battery), a performance test was conduct as follows: the cell was charged with a constant current of 5A to 4.2V, shelved for 5 min, snf the cell discharged to 2.5V with a constant current of 5A, resulting in a specific energy of 72Wh/Kg, and a specific power of 6000W/Kg. After 20000 charge/discharge cycles with a constant current of 5A, the capacitance retention rate is 95%.

### Example 3

Preparation steps for a Positive Electrode: prepare a total of 500g of Li Mn₂O₄, active carbon, graphite, PVDF in a mass ratio of 75: 15: 5:5, mix them with NMP, and stir to a paste. Coat the paste on a 20 µ m aluminum foil (weight increase after coating:300g/m ²). After the process of drying (110 ~ 120°C), grinding, cutting ( size: 37.5* 59.5mm²) and 24h of vacuum drying (120 ~ 130°C), a positive electrode is made.

Preparation steps for a negative Electrode: prepare a total of 500g of hardcarbon and PVDF in a mass ratio of 90: 10, mix them with NMP, and stir to a paste. Coat the paste on a 16 µ m copper foil (weight increase after coating: 120g/m²). After the process of drying (110 ~ 120°C), grinding(compaction density: 0.96g/cm ³), cutting (size: 37.5* 59.5mm²) and 24h of vacuum drying (120 ~ 130°C), a negative electrode is made.

A three-layer composite microporous membrane of polyethylene polypropylene is selected as a separator. The electrodes are put together in a aluminum casing (size:38 * 61 * 32) to make a cell (elastic ratio : 95%). The positive electrode are held together and welded onto an aluminum lug. The negative electrode are held together and welded onto a nickel plated copper lug. Then 0g of electrolyte, with a solvent (LiPF₆ of 1mol / L, + Et₄ NBF₄ of 0.5 mol/ L) +solvent EC (ethylene carbonate) / DEC (diethyl carbonate) (wherein volume ratio is 1 : 1) is inject in, and assembled to a prismatic super capacitor battery. After the formation process (performance activation of capacitor battery), a performance test was conducted as follows: the cell was charge with a constant current of 5A to 4.2V, shelved for 5 min, the cell was discharge to 2.75V with a constant current of 5A, resulting in a specific energy of 55Wh/Kg, and a specific power of is 5000W/Kg. After 20000 charge/discharge cycles with a constant current of 5A, the capacitance retention rate is 65%.

### Example 4

Preparation steps for a Positive Electrode: prepare a total of 500g of LiMn₂O₄, active carbon, graphite, PVDF in a mass ratio of 75: 15: 5:5, mix them with NMP, and stir to a paste. Coat the paste on a 20 µm aluminum foil (weight increase after coating: 300g/m ²). After the process of drying (110 ~ 120°C), grinding, cutting (size: 37.5* 59.5mm²) and 24h of vacuum drying (120 ~ 130 °C), a positive electrode is made.

Preparation steps for a negative Electrode: prepare a total of 500g of hardcarbon and PTFE in a mass ratio of 90: 10, mix them with deionized water, and stir to a paste. Grind the past with a roller press machine, to obtain a sheet electrode with a compaction density of 1.35. Make the conductive agent Super-P into a pulp, and coat the negative current collector with a layer of the conductive agent. Finally, attach the sheet electrode to the negative current collector with the conductive agent. After the process of drying, grinding, cutting (size: 37.5* 59.5mm²) and vacuum drying, a negative electrode is made.

A three-layer composite microporous membrane of polyethylene polypropylene is selected as a separator. The electrodes are put together in a aluminum casing (size:38 * 61 * 32) to make a cell (elastic ratio : 95%). The positive electrode are held together and welded onto an aluminum lug. The negative electrode are held together and welded onto a nickel plated copper lug. Then 10g of electrolyte, containing solvent (LiPF₆ of 1mol/L, + Et₄NBF₄ of 0.5 mol/L) +solvent EC (ethylene carbonate) / DEC (diethyl carbonate) (wherein volume ratio is 1 : 1), is inject in and assembled to form a prismatic super capacitor battery. After the formation process (performance activation of capacitor battery), a performance test was conducted as follows: the cell was charged with a constant current of 5A to 4.2V, shelved for 5 min, the cell was discharged to 2.5V with a constant current of 5A resulting in a specific energy of 66Wh/Kg, and a specific power of 6000W/Kg. After 20000 charge/discharge cycles with a constant current of 5A, capacitance retention rate is 85%.

### Example 5

Preparation steps for a Positive Electrode: prepare a total of 500g of LiFePO₄, active carbon, graphite, PVDF in a mass ratio of 75: 15: 5:5, mix them with NMP, and stir to a paste. Coat the paste on a 20 µm aluminum foil (weight increase after coating:300g/m ²). After the process of drying (110 ~ 120°C), grinding, cutting (size: 37.5* 59.5mm²) and 24h of vacuum drying (120 ~ 130 °C), a positive electrode is made.

Preparation steps for a negative Electrode: prepare a total of 500g of hardcarbon and PVDF in a mass ratio of 90: 10, mix them with NMP, and stir to a paste. Coat the paste on a 16 µm copper foil (weight increase after coating: 120g/m ²). After the process of drying (110 ~ 120 °C), grinding(compaction density: 0.96g/cm ³), cutting ( size: 37.5* 59.5mm²) and 24h of vacuum drying (120 ~ 130 °C), a negative electrode is made.

A three-layer composite microporous membrane of polyethylene polypropylene is selected as s separator. The electrodes are put together in a aluminum casing (size:38 * 61 * 32) to make a cell (elastic ratio : 95%). The positive electrode are held together and welded onto an aluminum lug. The negative electrode are held together and welded onto a nickel plated copper lug. Then 20g of electrolyte, comprising a solvent (LiPF₆ of 1mol / L, + Et₄ NBF₄ of 0.5 mol/ L) +solvent EC (ethylene carbonate) / DEC (diethyl carbonate) (wherein volume ratio is 1 : 1), is injected in and assembled to a prismatic super capacitor battery. After the formation process (performance activation of capacitor battery), performance testing was conduct as follows: the cell was charged with a constant current of 5A to 3.7V, shelved for 5 min, the cell was discharged to 2.3V with a constant current of 5A, resulting in a specific energy of 50Wh/Kg, and a specific power of 5000W/Kg. After 20000 charge/discharge cycles with constant current of 5A, the capacitance retention rate is 88%.

### Example 6

Preparation steps for a Positive Electrode: prepare a total of 500g of LiFePO₄, active carbon, graphite, PVDF in a mass ratio of 75: 15: 5:5, mix them with NMP, and stir to a paste. Then coat the paste onto a 20 µm aluminum foil (weight increase after coating: 300g/m²). After the process of drying (110 ~ 120 °C), grinding, cutting (size: 37.5* 59.5mm²) and 24h of vacuum drying (120 ~ 130 °C), a positive electrode is made.

Preparation steps for a negative Electrode: prepare a total of 500g of hardcarbon and PTFE in a mass ratio of 90: 10, mix them with deionized water, and stir to a paste. Grind the past with a roller press machine, to form a sheet electrode, with a compaction density of 1.35. Make the conductive agent Super-P to s pulp, and coat the negative current collector with a layer of the conductive agent. Finally, attach the sheet electrode to the negative current collector with the conductive agent. After the process of drying, grinding, cutting (size: 37.5* 59.5mm²) and vacuum drying, a negative electrode is made.

A three-layer composite microporous membrane of polyethylene polypropylene is selected as the separator. The electrodes are put together in a aluminum casing (size:38 * 61 * 32) to make a cell (elastic ratio : 95%). The positive electrode are held together, and welded onto an aluminum lug. The negative electrode are held together, and welded onto a nickel plated copper lug. Then 10g of electrolyte, comprising a solvent (LiPF₆ of 1 mol/L, + Et₄NBF₄ of 0.5 mol/L) +solvent EC (ethylene carbonate) / DEC (diethyl carbonate) (wherein volume ratio is 1 : 1), is inject in and assembled to a prismatic super capacitor battery. After the formation process (performance activation of capacitor battery), performance testing was conducted as follows: the cell was charged with a constant current of 5A to 3.7V, shelved for 5 min, the cell was discharged to 2.3V with a constant current of 5A, resulting in a specific energy of 60Wh/Kg, and a specific power of 6000W/Kg. After 20000 charge/discharge cycles with a constant current of 5A, the capacitance retention rate is 96%.

The above content is only a basic description of this inventive concept, the technical solutions or any equivalent variations made according to the present invention should belong to the scope of protection of the present invention.

## Claims

1. A long cycle life negative electrode for use in an organic hybrid capacitor battery, the preparation steps of the negative electrode comprising:
(a) Blending the following materials: blending a carbon material with a fast lithium intercalation capability with a binder, and add in a solvent;
(b) Pressing: pressing the blended material to get an electrode plate of a certain thickness;
(c) Coating: stirring a conductive agent to a paste, then attaching the paste to a cathode current collector;
(d) Electrode attaching: attaching the electrode plate to the conductive agent coated negative current collector;
(e) Drying, grinding, cutting and vacuum drying, to form a negative electrode.

2. An preparation technology of claim 1, wherein the electrode plate is attached to the conductive agent coated negative current collector, and is made a density of 1.2~1.6g/cm³.

3. An organic hybrid capacitor battery comprising the long cycle life negative electrode prepared by the method of claim 1, comprising an anode comprising a mixture of lithium-ion intercalation compounds and a porous activated carbon with a coating process, and a cathode comprising a carbon material with fast lithium intercalation capability, in which the interlayer spacing is greater than 0.372nm, and wherein the electrolyte is an organic solution.

4. The organic hybrid capacitor battery of claim 3, wherein the cathode comprises carbon material with a fast lithium intercalation capability, in which the interlayer spacing is greater than 0.372 nm, and hard carbon is one of the materials.

5. The organic hybrid capacitor battery of claim 3, wherein the porous carbon is selected from the group consisting of activated carbon, carbon cloth, carbon fiber, carbon fiber felt, carbon aerogels, carbon nanotubes, and mixtures thereof.

6. The organic hybrid capacitor battery of claim 3, wherein the lithium-ion intercalation compound is selected from the group consisting of LiCoO₂. LiMn₂O₄. LiNiO₂. LiFePO₄. LiNi_{0.8}Co_{0.2}O₂, LiNi_{1/3}Co_{1/3}Mn_{1/3}O₂, LiMnO₂, and mixtures thereof.

7. The organic hybrid capacitor battery of claim 3, wherein the solvent in the electrolyte is selected from the group consisting of: LiClO₄, LiBF₄, LiPF₆, LiCF₃SO₃, LiN(CF₃SO₂), LiBOB, LiAsF₆. Et₄BF₄, and mixtures thereof; and mixed with one selected from the group consisting of Me₃EtNBF₄, Me₂Et₂NBF₄, MeEt₃NBF₄, Et₄NBF₄, Pr₄NBF₄, MeBu₃NBF₄, Bu₄NBF₄, Hex₄NBF₄, Me₄PBF₄, Et₄PBF₄, Pr₄PBF₄, Bu₄PBF₄, and mixtures thereof; and the non-aqueous organic solvent in the electrolyte is selected from the group consisting of ethylene carbonate, propylene carbonate, γ-butyrolactone, dimethyl carbonate, diethyl carbonate, butylene ester carbonate, ethyl methyl carbonate, Methyl Propyl Carbonate, sulfurous acid vinyl ester, acrylic ester of sulfurous acid and ethyl acetate, acetonitrile, and mixtures thereof.

8. The organic hybrid capacitor battery of claim 3, further comprising a separator selected from the group consisting of microporous polyethylene film, polypropylene microporous membranes, composite membranes, inorganic ceramic membrane, the paper diaphragm, and non-woven diaphragm.

9. A preparation method for making the organic hybrid capacitor battery of claim 3, the method comprising:
( 1 ) Preparing an anode by: mixing a lithium-ion intercalated compound, a porous activated carbon material, a conductive agent, and a binder; pulping the mixture; then coating the mixture on an anode current collector; and drying, grinding, cutting and vacuum drying, to form an anode;
( 2 ) Preparing a cathode:
(a) Blending the following materials: blend a carbon material with a fast lithium intercalation capability with a binder, and add in a solvent;
(b) Pressing: pressing the blended material to get an electrode plate of a certain thickness;
(c) Coating: stirring a conductive agent to a paste, then attaching the paste to a cathode current collector;
(d) Electrode attaching: attaching the electrode plate to the conductive agent coated negative current collector;
(e) Drying , grinding, cutting and vacuum drying, to form a negative electrode.
( 3 ) Assembling: stacking or winding the prepared anode and cathode into cells placed in an aluminum composite film, aluminum casing, steel casing, or plastic casing, and then sealing the casing, and injecting within the casing an electrolyte of non-aqueous organic solvents containing lithium ions and a quaternary ammonium salt.

10. The method of claim 9, wherein the conductive agent is selected from the group consisting of: natural graphite, artificial graphite, carbon black, acetylene black, mesophase carbon microbeads, hard carbon, petroleum coke, carbon nanotubes and graphene; and the binder is selected from the group consisting of: polytetrafluoroethylene, polyvinylidene fluoride, ethylene, hydroxypropyl methyl cellulose, carboxymethyl cellulose and styrene butadiene rubber.

11. The method of claim 9, wherein the cathode current collector includes aluminum foil or aluminum mesh, and the anode current collector includes copper foil or copper mesh.
